# EUROPÄISCHE PATENTSCHRIFT

(11) **EP 1 398 194 B1**
(45) Veröffentlichungstag und Bekanntmachung des Hinweises auf die Patenterteilung: **15.04.2009**
(21) Anmeldenummer: 03015867.9
(22) Anmeldetag: 11.07.2003
(51) Int. Cl.: B60J 7/12

(54) **Cabriolet-Fahrzeug**
Convertible vehicle
Véhicule convertible

(30) Priorität: 17.07.2002 DE 20210763 U
(43) Veröffentlichungstag der Anmeldung: 17.03.2004
(73) Patentinhaber: Wilhelm Karmann GmbH, 49084 Osnabrück (DE)
(72) Erfinder: Hollenbeck, Sven, 49492 Westerkappeln (DE); Maass, Joachim, 49143 Bissendorf (DE)

(56) Entgegenhaltungen:
- DE-A- 19 820 711
- DE-A- 19 955 404
- FR-A- 2 695 081

## Beschreibung

Die Erfindung betrifft ein Cabriolet-Fahrzeug mit einem Verdeck, das zumindest einen starren vorderen Bereich aufweist, nach dem Oberbegriff des Anspruchs 1.

Aus der gattungsgemäßen DE 198 20 711 A1 ist eine Vorrichtung zum Dämpfen der Bewegung eines Frontspriegels bekannt, bei der dieser über ein Zugseil und eine Druckfeder mit einem weiter hinten liegenden Spriegel verbunden ist. Dabei verläuft das Zugseil nahezu parallel zur Ebene des Dachbezugs. Da der Winkel zwischen der den Frontspriegel tragenden Dachspitze und einem weiter hinten liegenden Dachteil während der Schließbewegung des Daches bei Lage der Dachspitze im Nahbereich des Windschutzscheiben-rahmens recht klein ist, kann der Hubweg der Dämpfungs-vorrichtung nur gering sein. Es ist daher eine erhebliche Vorspannung der Dämpfungsvorrichtung erforderlich, um ein Aufschlagen der Dachspitze auf den Windschutzscheibenrahmen in jedem Fall zu vermeiden. Eine derart hohe Vorspannung spannt jedoch das durch die Spannung geradlinig verlaufende Zugseil einschneidend in den Winkel des textilen Bezuges zwischen der Dachspitze und einem entgegen der Fahrtrichtung anschließenden Dachteil. Zudem ist die Kopffreiheit durch die Erstreckung der Dämpfungsvorrichtung, insbesondere wenn pro Fahrzeugseite jeweils eine vorgesehen ist, eingeengt. Zur Bewegung der ohnehin relativ schweren Dachspitze muß eine Zusatzkraft für die Bewegung des Gewichts der Dämpfungsvorrichtung aufgebracht werden.

Der Erfindung liegt das Problem zugrunde, ein Cabriolet-Fahrzeug hinsichtlich der Dämpfung der Dachspitzenbewegung zu optimieren.

Die Erfindung löst dieses Problem durch ein Cabriolet-Fahrzeug mit den Merkmalen des Anspruchs 1. Hinsichtlich vorteilhafter Ausgestaltungen wird auf die abhängigen Ansprüche 2 bis 9 verwiesen.

Erfindungsgemäß ist mit der Verlagerung der Dämpfungseinrichtung in den rückwärtigen Verdeckbereich eine raumbeanspruchende Zusatzeinrichtung gerade im vorderen, hinsichtlich der Kopffreiheit kritischen Bereich vermieden. Ebenso ist dort auch ein Zusatzgewicht vermieden.

Wenn die Dämpfungseinrichtung einem Totpunktgestänge und einem hinteren Spannbügel zugeordnet ist und deren Bewegung gegeneinander hemmt, kann eine plötzliche Bewegung des Totpunktgestänges über einen Totpunkt hinaus verhindert werden.

Die Dämpfungseinrichtung kann in solchen Verdeckbereichen angeordnet sein, die sich seitlich einer Hutablage befinden. Die Kopffreiheit ist dadurch nicht eingeschränkt. Auch ansonsten ist diese Anordnung raumsparend.

Räumlich besonders vorteilhaft ist etwa ein Öldämpfer parallel zur Erstreckung des Spannbügels und unmittelbar neben diesem gelegen, wobei über eine Umlenköse ein Zugglied in Funktionsstellung im wesentlichen vertikal aufragt und auf den hinteren Abschnitt des Totpunktgestänges einwirkt.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische Seitenansicht der Ge- stängeteile eines erfindungsgemäßen Verdecks bei angehobener Stellung seines vorderen Bereichs und angehobenem hinte- rem Spannbügel,
- Fig. 2: eine ähnliche Ansicht wie Figur 1 in einer Zwischenstellung des Verdecks, in der es gegenüber Figur 1 weiter in Schließrichtung verlagert ist,
- Fig. 3: eine ähnliche Ansicht wie Figur 2 bei vollständig geschlossenem Dach und ge- spanntem Zugseil der Dämpfungseinrich- tung,

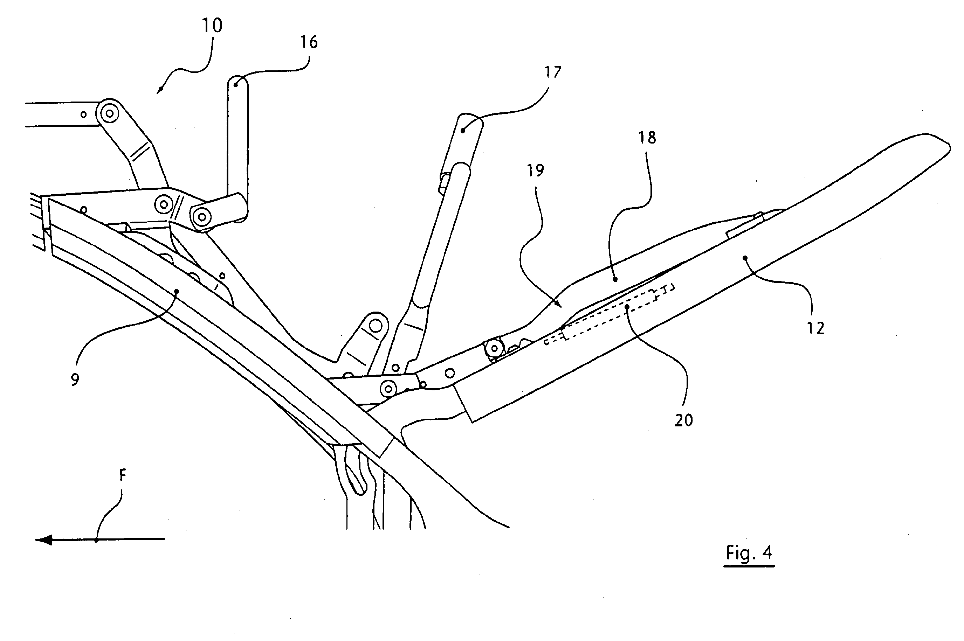

- Fig. 4: das Detail IV in Figur 1,

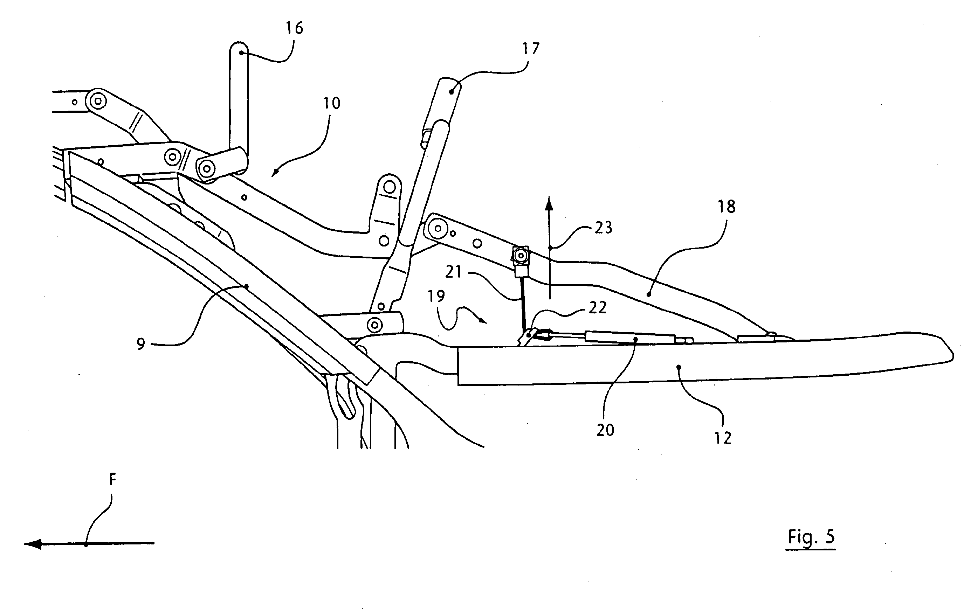

- Fig. 5: das Detail V in Figur 3,
- Fig. 6: eine perspektivische Detailansicht der Dämpfungseinrichtung mit am Spannbügel festgelegtem Öldämpfer und Umlenköse so- wie von dort aufragendem Zugseil.

Das erfindungsgemäße Cabriolet-Fahrzeug (nicht vollständig gezeichnet) ist mit einem Verdeck 1 versehen, das zumindest einen starren vorderen Bereich 3 aufweist. Dieser vordere Bereich 3 wird häufig auch als Dachspitze bezeichnet und steht bei geschlossenem Verdeck 1 in verriegeltem Kontakt mit einem Windschutzscheibenrahmen 4. Der vordere Bereich 3 umfaßt im Ausführungsbeispiel einen dem Verlauf des horizontalen Querrahmenteils 5 des Windschutzscheibenrahmens 4 angepaßten Querträger 6 sowie sich hiervon heckwärts erstreckende seitliche Rahmenteile 7. Auch eine anders geartete Gestaltung der Dachspitze 3, etwa als einstükkiges Druckgußteil oder Plattenkörper oder auch als vielgliedrige Verbindung von Leichtmetallprofilen, ist möglich. Zumindest sofern die Dachspitze 3 keinen durchgehenden Plattenkörper ausbildet, ist sie üblicherweise textil überspannt.

Auch das Verdeck 1 kann insgesamt aus starren Teilen gebildet sein oder ganz oder teilweise flexibel ausgebildet sein.

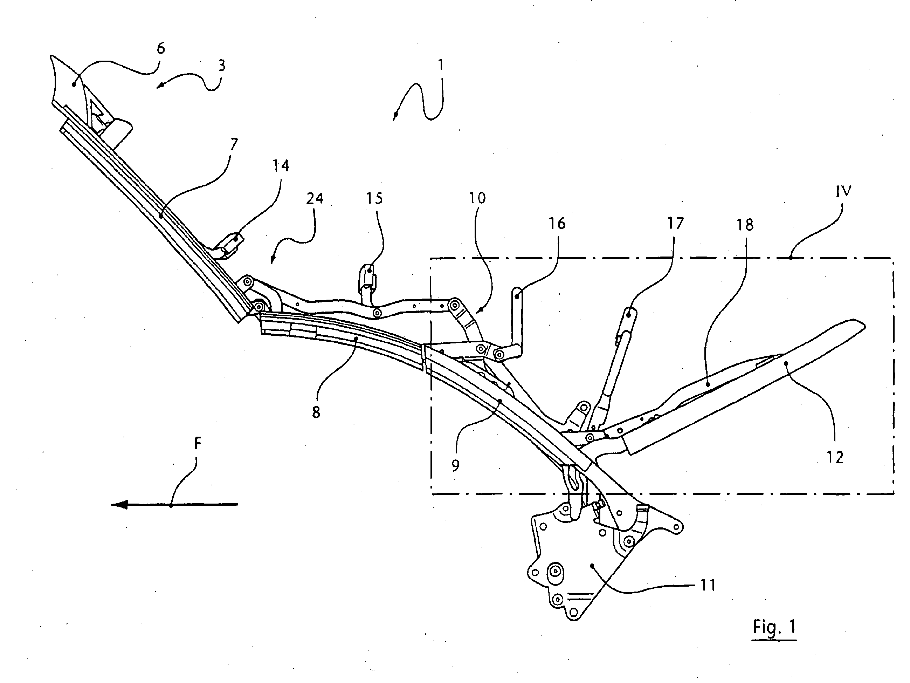

Das im Ausführungsbeispiel gezeichnete Verdeck 1 gemäß Figur 1 ist insgesamt textil überspannt. Es umfaßt drei seitliche, in geschlossenem Zustand aufeinander folgende Rahmenteile 7, 8, 9, die über ein insgesamt mit 10 bezeichnetes Totpunktgestänge miteinander in Verbindung stehen.

Das Verdeck 1 ist insgesamt über ein karosserieseitiges Hauptlager 11 beweglich.

Der textile Bezug des Verdecks 1 ist neben seiner Befestigung an der Dachspitze 3 über die seitlichen Rahmenteile 7, 8, 9, einen sich im Heckbereich zwischen den Fahrzeuglängsseiten erstreckenden Spannbügel 12 und weitere sich quer zwischen den Rahmenteilen 7, 8 bzw. 9 erstreckte Spriegel 14, 15, 16, 17 spannbar.

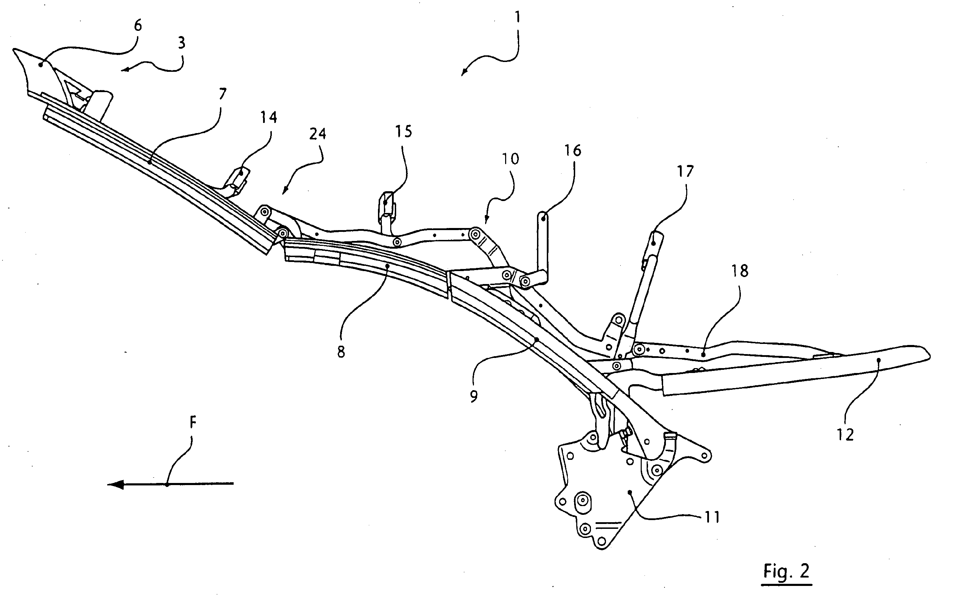

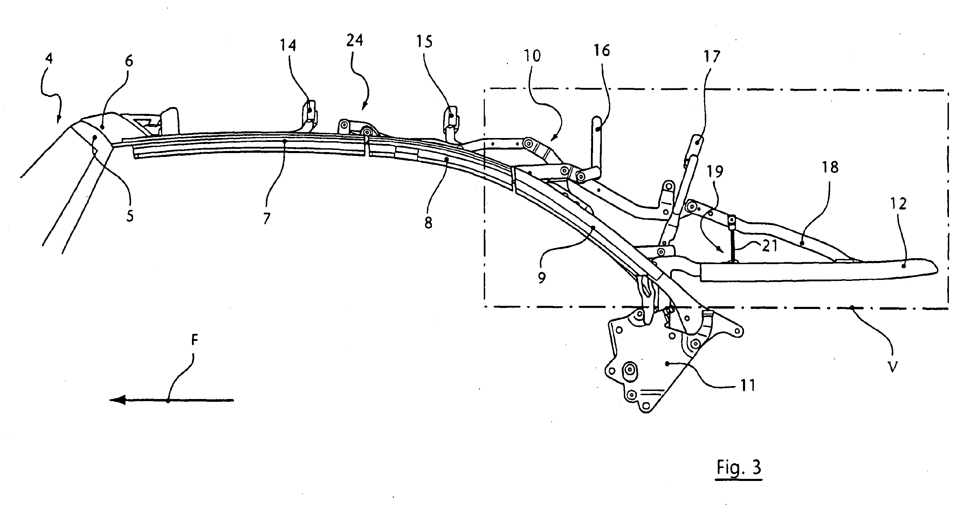

Das Totpunktgestänge 10 ist mit allen seitlichen Rahmenteilen 7, 8, 9 und dem hinteren Spannbügel 12 beweglich verbunden. Bei geöffnetem Dach 1 ist das Totpunktgestänge 10 entspannt, nähert sich dann in der Schließbewegung, etwa in der Stellung nach Fig. 2, der Totpunktlage und entspannt von dort in Richtung des vollständigen Schließens (Fig. 3). Ohne eine Dämpfung würde dadurch der vordere Bereich 3 mit seinem Querträger 6 auf den Windschutzscheibenrahmenteil 5 aufschlagen.

Im heckwärtigen Bereich verläuft ein rückwärtiger Lenker 18 des Totpunktgestänges 10 bei geöffnetem Dach nach Figur 1 in etwa parallel zum Längsanteil des hinteren Spannbügels 12. Bei weiterem Schließen des Verdecks 1 vergrößert sich der Winkel zwischen dem Lenker 18 und dem Spannbügel 12.

Gemäß dem gezeichneten Ausführungsbeispiel ist eine Dämpfungsvorrichtung 19 im rückwärtigen Bereich des Verdecks 1 derart angeordnet, daß sie die Winkelöffnung zwischen dem Lenker 18 des Totpunktgestänges 10 und dem Spannbügel 12, also die Bewegung des Lenkers 18 in Richtung des Pfeils 23, hemmt.

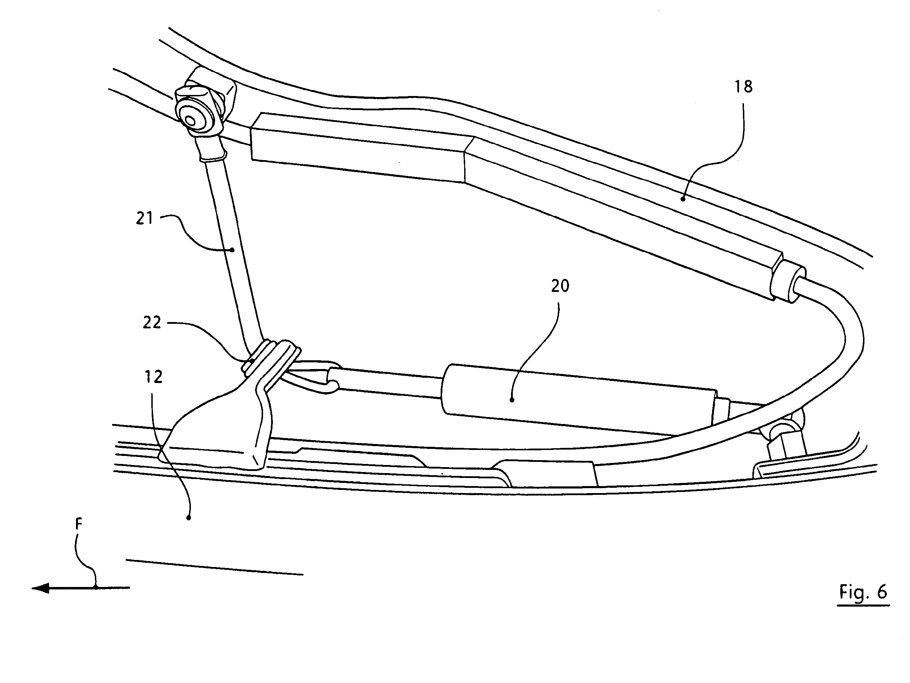

Die Dämpfungseinrichtung 19 umfaßt einen Dämpfer 20, der hier als Öldruckdämpfer ausgebildet und an dem Spannbügel 12 festgelegt ist. Dabei liegt der Dämpfer 20 parallel zum Längsanteil des Spannbügels 12. Der Dämpfer 20 ist mit einem Zugseil 21 verbunden, das elastisch sein kann. An dem Spannbügel 12 ist weiter eine Umlenköse 22 vorgesehen, durch die das Zugseil 21 geführt ist und sich von dort aus zu dem hinteren Lenker 18 des Totpunktgestänges 10 erstreckt (Fig. 6).

Dadurch wird der Abstand zwischen dem Lenker 18 und dem Längsanteil des Spannbügels 12 von der Dämpfungseinrichtung 19 überbrückt. Der Abstand der genannten Teile ist jedoch bei geschlossenem Verdeck 1 derart groß, daß er nur dann überbrückt werden kann, wenn der Kolben des Dämpfers 20 ausfährt und somit eine hinreichende Länge des Zugseils 21 freigibt.

Bei zunehmender Schließbewegung (Übergang von Figur 1 zu Figur 3), insbesondere ab Erreichen der Totpunktstellung, wird durch die zunehmende Winkelöffnung zwischen dem Lenker 18 und dem Spannbügel 12 deren Abstand zueinander vergrößert, so daß das Zugseil 21 gespannt und der Öldruckdämpfer 20 aktiviert wird und einen Widerstand gegen den ungebremsten Auszug des Zugseils 21 liefert. Dieses verlangsamt daher die Abstandsvergrößerung des Lenkers 18 des Totpunktgestänges 10 gegenüber dem Spannbügel 12. Somit ist eine Dämpfung der Öffnungsbewegung zwischen den Teilen 12 und 18 gegeben.

Da das Totpunktgestänge 10 auch mit dem seitlichen Rahmenteil 7 des vorderen Bereichs 3 am Scharnier 24 in Verbindung steht, ist durch die Hemmung der Schließbewegung des Totpunktgestänges 10 auch die Absenkbewegung der Dachspitze 3 gehemmt. Diese erfährt ein aufwärts gerichtetes Drehmoment um das Scharnier 24, das der Gewichtskraft der Dachspitze 3 entgegenwirkt. Deren Durchschlagen auf den Windschutzscheibenrahmen 4 ist dadurch verhindert.

Es ist besonders günstig, wenn der Dämpfer 20 lediglich eine Dämpfung der Zugbewegung bewirkt, d. h., sobald die Zugkraft nachläßt, wirkt eine im Dämpfer 20 integrierte Druckfeder und stellt den Dämpfer zurück.

Der Hubweg kann aufgrund der günstigen räumlichen Anordnung der Dämpfungseinrichtung 19 groß gewählt werden, typisch etwa 40 mm, wodurch eine zuverlässige Dämpfung der Absenkbewegung der Dachspitze 3 über einen großen Schwenkwinkel erreicht ist, was ein besonders sanftes Abfangen der Dachspitze 3 bewirkt.

Zudem werden nur wenige und standardisierte Bauteile verwendet, was zu einem geringen Montageaufwand führt und hinsichtlich der Teilekosten günstig ist. Eine Dämpfungseinrichtung 19 kann jeder Fahrzeugseite zugeordnet sein.

## Patentansprüche

1. Cabriolet-Fahrzeug mit einem Verdeck (1), das zumindest einen starren vorderen Bereich (3) zur Verbindung mit einem Windschutzscheibenrahmen (4) aufweist, wobei der vordere Bereich (3) mit einer abwärts weisenden Bewegungskomponente an den Windschutzscheibenrahmen (4) heranführbar ist und zur Hemmung dieser Bewegung zumindest eine Dämpfungseinrichtung (19) vorgesehen ist,
**dadurch gekennzeichnet,**
**daß** die Dämpfungseinrichtung (19) in einem heckwärtigen Verdeckbereich zwei Gestängeteilen (18;12) zugeordnet ist, deren Abstand sich beim Heranführen des vorderen Bereichs (3) an den Windschutzscheibenrahmen (4) vergrößert.

2. Cabriolet-Fahrzeug nach Anspruch 1,
**dadurch gekennzeichnet,**
**daß** die Gestängeteile durch einen heckseitigen Spannbügel (12) und einen Abschnitt (18) eines Totpunktgestänges (10) gebildet sind.

3. Cabriolet-Fahrzeug nach Anspruch 2,
**dadurch gekennzeichnet,**
**daß** das Totpunktgestänge (10) der Fahrzeuglängsrichtung folgend innerhalb von seitlichen Rahmenteilen (7;8;9) des Verdecks (1) gehalten ist, wobei ein im geschlossenen Verdeckzustand in Fahrtrichtung (F) vorderer Abschnitt des Totpunktgestänges (10) mittelbar oder unmittelbar mit dem vorderen Bereich (3) verbunden ist.

4. Cabriolet-Fahrzeug nach einem der Ansprüche 2 oder 3,
**dadurch gekennzeichnet,**
**daß** der vordere Bereich (3) eine sich in geschlossener Stellung vom Windschutzscheibenrahmen (4) bis zu einer weiter hinten gelegenen Verbindung mit dem Totpunktgestänge (10) erstreckende starre Baugruppe umfaßt.

5. Cabriolet-Fahrzeug nach Anspruch 4,
**dadurch gekennzeichnet,**
**daß** die Baugruppe textil überspannt ist.

6. Cabriolet-Fahrzeug nach einem der Ansprüche 1 bis 5,
**dadurch gekennzeichnet,**
**daß** die Dämpfungseinrichtung (19) nur bei Zugbeanspruchung wirksam ist.

7. Cabriolet-Fahrzeug nach einem der Ansprüche 1 bis 6,
**dadurch gekennzeichnet,**
**daß** die Dämpfungseinrichtung (19) einen Öldämpfer (20) mit Kolbenrückstellfeder umfaßt.

8. Cabriolet-Fahrzeug nach Anspruch 7,
**dadurch gekennzeichnet,**
**daß** der Öldämpfer (20) parallel zur Erstrekkung eines Seitenteils des Spannbügels (12) gelegen ist und über eine Umlenköse (22) und ein Zugglied (21) auf den Abschnitt (18) des Totpunktgestänges (10) einwirkt.

9. Cabriolet-Fahrzeug nach einem der Ansprüche 1 bis 8,
**dadurch gekennzeichnet,**
**daß** der Hubweg der Dämpfungseinrichtung (19) zumindest 35 mm beträgt.

## Claims

1. A convertible car with a convertible top (1) having at least one rigid front portion (3) for connection with a windshield frame (4), wherein the front portion (3) can be brought close to the windshield frame (4) by means of a downward-pointing motion component, and at least one damping device (19) is provided for blocking said movement,
**characterized in that,**
in a rear portion of the convertible top, the damping device (19) is assigned to two rod members (18; 12), the distance of which rod members is increased when bringing the front portion (3) close to the windshield frame (4).

2. A convertible car according to claim 1,
**characterized in that**
the rod members are formed by a rear tensioning bracket (12) and a section (18) of a dead centre rod assembly (10).

3. A convertible car according to claim 2,
**characterized in that**
the dead centre rod assembly (10) is retained along the longitudinal direction of the vehicle within lateral frame parts (7; 8; 9) of the convertible top (1), wherein a section of the dead centre rod assembly, which section is a front section in driving direction when the convertible top is in the closed position, is directly or indirectly connected to the front portion (3).

4. A convertible car according to one of the claims 2 or 3,
**characterized in that**
the front portion (3) comprises a rigid assembly that, in the closed position, extends from the windshield frame to a connection with the dead centre rod assembly, which connection is located further back.

5. A convertible car according to claim 4,
**characterized in that**
the assembly is textile-spanned.

6. A convertible car according to one of the claims 1 to 5,
**characterized in that**
the damping device (19) is only effective with tensile loading.

7. A convertible car according to one of the claims 1 to 6,
**characterized in that**
the damping device (19) comprises an oil damper (20) with a piston return spring.

8. A convertible car according to claim 7,
**characterized in that**
the oil damper (20) is positioned in parallel to the extension of a side member of the tensioning bracket (12) and affects the section (18) of the dead centre rod assembly (10) via a diverting lug (22) and a tension member (21).

9. A convertible car according to one of the claims 1 to 8,
**characterized in that**
the length of stroke of the damping device (19) is at least 35 mm.

## Revendications

1. Véhicule automobile cabriolet doté d'une capote (1), qui présente au moins une zone avant rigide (3) servant à relier la capote au cadre du pare-brise (4), la zone avant (3) pouvant être rapprochée du cadre du pare-brise (4) avec un composant de déplacement orienté vers le bas et au moins un dispositif d'amortissement (19) étant prévu pour empêcher ce mouvement,
**caractérisé en ce**
**que** le dispositif d'amortissement (19) est associé, dans une zone arrière de la capote, à deux parties de tige (18 ; 12), entre lesquelles la distance augmente lorsque la zone avant (3) se rapproche du cadre du pare-brise (4).

2. Véhicule automobile cabriolet selon la revendication 1,
**caractérisé en ce**
**que** les parties de tige sont formées par un arceau de fixation (12) côté hayon et une section (18) d'une tige morte (10).

3. Véhicule automobile cabriolet selon la revendication 2,
**caractérisé en ce**
**que** la tige morte (10) est maintenue, dans le sens longitudinal du véhicule, à l'intérieur des parties latérales du cadre (7 ; 8 ; 9) de la capote (1), une section avant de la tige morte (10), étant, lorsque la capote est fermée dans le sens de la marche (M), directement ou indirectement reliée à la zone avant (3).

4. Véhicule automobile cabriolet selon l'une quelconque des revendications 2 ou 3,
**caractérisé en ce**
**que** la zone avant (3) comporte un ensemble rigide s'étendant jusqu'à une liaison arrière à la tige morte (10), lorsque le cadre du pare-brise (4) est en position fermée.

5. Véhicule automobile cabriolet selon la revendication 4,
**caractérisé en ce**
**que** la toile de l'ensemble est surtendu.

6. Véhicule automobile selon l'une quelconque des revendications 1 à 5,
**caractérisé en ce**
**que** le dispositif d'amortissement (19) n'est efficace qu'en cas de contrainte de tension.

7. Véhicule automobile selon l'une quelconque des revendications 1 à 6,
**caractérisé en ce**
**que** le dispositif d'amortissement (19) comporte un amortisseur à huile (20) doté d'un ressort pour le rappel des pistons.

8. Véhicule automobile cabriolet selon la revendication 7,
**caractérisé en ce**
**que** l'amortisseur à huile (20) est posé de manière parallèle par rapport au sens d'extension d'une partie latérale de l'arceau de fixation (12) et agit sur la section (18) de la tige morte (10) via un oeillet de déviation (22) et un membre de traction (21).

9. Véhicule automobile cabriolet selon l'une quelconque des revendications 1 à 8,
**caractérisé en ce**
**que** la course d'élévation du dispositif d'amortissement (19) est d'au moins de 35 mm.
